# FASCICULE DE BREVET EUROPEEN

(11) **EP 1 469 788 B1**
(45) Date de publication et mention de la délivrance du brevet: **28.11.2007**
(21) Numéro de dépôt: 02701346.5
(22) Date de dépôt: 30.01.2002
(51) Int. Cl.: A61C 19/00, B29C 35/08

(54) **DISPOSITIF ELECTRO-OPTIQUE POUR LA PHOTO POLYMERISATION DE MATERIAUX COMPOSITES**
ELEKTRO-OPTISCHE VORRICHTUNG ZUR PHOTOPOLYMERISATION VON KUNSTSTOFFMASSEN
ELECTRO-OPTICAL DEVICE FOR THE PHOTO-POLYMERIZATION OF COMPOSITE MATERIAL

(43) Date de publication de la demande: 27.10.2004
(73) Titulaire: Satelec - Société pour la Conception des Applications des Techniques Electroniques, 33700 Merignac (FR)
(72) Inventeur: DURET, François, F-11560 Fleury d'Aude (FR); NOUI, Hervé, F-11110 Salles D'Aude (FR); DECAUDIN, Jean-Michel, F-13880 Velaux (FR)
(74) Mandataire: Puiroux, Guy
(86) Numéro de dépôt international: PCT/FR2002/000354
(87) Numéro de publication internationale: WO 2003/068102

(56) Documents cités:
- WO-A1-01/60280
- US-A1- 2001 016 652
- US-A1- 2001 046 652

## Description

La présente invention a pour objet un dispositif électro-optique pour la photo polymérisation de matériaux composites, d'application notamment dans le domaine dentaire.

Les matériaux composites utilisés dans l'art dentaire sont généralement à base d'une résine photo polymérisable dont la structure moléculaire se transforme sous l'effet d'un rayonnement lumineux d'une longueur d'onde donnée en fonction de la capacité d'absorption du matériau utilisé. Ainsi, en cours de polymérisation, ce rayonnement active les photo initiateurs du matériau, pendant un temps d'exposition calculé en fonction de l'énergie de ce rayonnement pour éviter un échauffement trop important des tissus environnant la zone de traitement.

Il convient d'observer que les paramètres du rayonnement, longueur d'onde, intensité, temps d'exposition, dépendent bien sûr de la composition particulière de chaque composite, mais également de sa couleur et de son épaisseur. Un composite plus foncé et de plus grande masse nécessitera pour sa photo polymérisation un rayonnement de plus forte intensité. C'est ce que l'on appelle les paramètres de polymérisation. Pour permettre à ces facteurs d'agir de manière optimale, c'est-à-dire de manière invariable durant le temps d'exposition et suffisamment longtemps pour qu'un praticien puisse les utiliser lors de ses séances de soins sans interruption dangereuse, aucune solution suffisamment fiable n'a été proposée.

On connaît d'ores et déjà des dispositifs de photo polymérisation répondant à la description qui en est faite ci-dessus et qui utilisent des diodes électroluminescentes, dénommées usuellement des LED, susceptibles d'émettre souvent un rayonnement de longueurs d'onde comprises entre 380 et 510 nm. Ainsi de tels dispositifs comportent une carte de puissance, un système de refroidissement, une source lumineuse et des moyens optiques pour orienter et émettre l'énergie lumineuse produite par ladite source en direction de la zone à éclairer (ou site clinique). Ces moyens électroniques se présentent, par exemple, sous forme d'une carte d'alimentation, de type alimentation par régulation linéaire, le courant des LED étant défini par résistance de polarisation et d'un système de ventilation actif (ventilateur ou par effet Peltier) ou passif (carte céramique).

En fin de compte, ces appareils connus à ce jour sont adaptés pour émettre un rayonnement d'un profil défini sans possibilité, pour l'opérateur, d'être certain que sa puissance est stable et l'obligeant à supporter les effets nocifs du ventilateur de refroidissement ou l'efficacité discutable des systèmes de refroidissement passifs précités. En fait, le seul paramètre sur lequel une action est possible avec précision est le temps d'éclairage. Aussi, de tels dispositifs ne présentent guère de garantie d'utilisation et sont d'application limitée.

En tant que source lumineuse dans ce type d'appareil, il est par exemple utilisé, des lampes à vapeur de mercure qui présentent l'inconvénient d'émettre dans le spectre des ultraviolets, ce qui est dangereux pour les yeux et la muqueuse buccale des patients. Ces lampes utilisent des sources d'alimentation nécessitant des courants et tensions de démarrage élevés, et des systèmes de refroidissement le plus souvent à base de ventilateurs et donc à air pulsé ou éventuellement pour les plus puissantes à base de circulation d'eau et radiateurs. D'autres dispositifs utilisent des lampes halogènes qui présentent l'inconvénient de posséder un rapport lumen/watt, faible et une dissipation thermique élevée par rapport à l'énergie lumineuse produite, ce qui oblige à limiter la montée de la puissance pour obtenir de plus grandes intensités. Ces lampes utilisent des sources d'alimentation dont le rendement est sans commune mesure par rapport à la puissance utile et des systèmes de refroidissement également à base d'air puisé.

D'autres dispositifs sont équipés de lasers, mais les faisceaux lumineux qu'ils génèrent correspondent à une lumière monochromatique qui ne peut, en raison de son spectre de longueur d'onde réduit, polymériser, là encore, que des composites bien définis. Ces lampes utilisent des sources d'alimentation complexes et des systèmes de refroidissement à air pulsé ou circulation d'eau. De plus, les lasers sont des appareils onéreux qui présentent, en outre, un coût d'entretien et de mise en oeuvre élevé.

Il est encore connu des dispositifs qui font appel à des électrodes espacées et soumises à des différences de potentiel électrique aptes à produire un arc électrique au travers d'un gaz partiellement ionisé à haute température. De tels systèmes emploient, en combinaison, un filtre infrarouge placé immédiatement devant la source et permettant d'obtenir un spectre lumineux d'émission compris entre 400 et 800 nm. Un filtre passe-bas permet de fixer ensuite la fréquence de coupure haute du filtre à environ 515 nm. Ces lampes utilisent des sources d'alimentation nécessitant des tensions d'amorçage de plusieurs kilovolt et des systèmes de refroidissement à air pulsé pour les moins puissantes et à circulation d'eau pour les autres.

Toutefois, dans ces dispositifs, le système de filtrage ne permet pas d'augmenter, sans danger, la puissance lumineuse de la source, car l'énergie lumineuse absorbée par les tissus biologiques peut conduire à leur destruction en cas de forte élévation de la température. En outre, le profil énergétique, qui représente les variations de l'intensité lumineuse émise au cours du temps, ne peut pas être modifié. Cela exclut, par conséquent, toute possibilité de l'adapter à des matériaux composites de différentes couleurs, par exemple.

Il existe aussi des dispositifs à photo polymériser utilisant l'énergie plasma et ayant une zone d'émission sélective isolée grâce à des filtrations plus ou moins complexes. Un document FR-98 01243 décrit un tel appareil. Ces lampes utilisent des sources d'alimentation nécessitant là encore des tensions d'amorçage de plusieurs kilovolt et des systèmes de refroidissement à air pulsé ou à circulation d'eau.

A noter que de tels dispositifs présentent la particularité de laisser passer des rayonnements hautement caloriques dans des zones au-delà des 1200 nm. Ceci a pour conséquence d'élever dangereusement la température au moment de la polymérisation. Par ailleurs, ces dispositifs nécessitent des systèmes de refroidissement performants qui sont d'un coût et d'un poids élevés.

L'on connaît encore, par exemple par les documents EP-A-0 880 945, JP-A-9010238, US-A-5 634 711, PCT/AU97/00207, des dispositifs de photo polymérisation dont la source lumineuse est définie par des LED. En fait, il s'agit d'une pluralité de LED bleues disposées sur un plateau support perpendiculairement à l'intérieur du corps de l'appareil. A l'avant de ce plateau de diodes LED, se trouvent des moyens pour concentrer les rayonnements émis et pour les orienter en direction d'un guide d'onde dont l'extrémité distale vient projeter ce rayonnement concentré sur la surface à traiter. Ce dispositif peut emprunter la forme d'un pistolet raccordé à une alimentation en énergie électrique externe. Ces lampes utilisent comme sources d'alimentation des résistances pour déterminer le courant de polarisation des LED. Contrairement aux dispositifs décrits précédemment, le besoin en refroidissement est moindre. En effet, la conversion « énergie électrique » en « énergie lumineuse » se fait avec un très bon rendement et lorsque les LED. sont utilisées à leur caractéristique nominale, la dissipation thermique ne nécessite pas en général de moyens actifs de refroidissement. Dans le cas d'une utilisation à la photo polymérisation, on cherche à obtenir la plus grande puissance des diodes, ce qui est possible en les faisant fonctionner à un courant supérieur à celui normalement prévu. Si aucune précaution n'est prise, cette augmentation du courant génère un échauffement des diodes qui modifie leurs caractéristiques électriques et une baisse de la puissance émise. On obtient alors le résultat inverse de celui souhaité. La maîtrise commune du comportement thermique et de l'alimentation électrique sont nécessaires pour obtenir la puissance la plus élevée.

Dans tous les cas cités, et plus particulièrement ceux se rapportant aux sources LED, l'appareil reçoit des systèmes d'alimentation classiques instables dans le temps, et le comportement général est très sensible à l'élévation de température. Il est en particulier noté par les fabricants de LED qu'une élévation de température de 40° peut entraîner une modification du courant transmis et donc une baisse de puissance de près de 50 %.

Tous les montages qui ont été proposés ne règlent que partiellement le problème ou obligent l'utilisateur à utiliser des systèmes de refroidissement classiques bruyants et devant être connectés sur le secteur limitant ainsi considérablement sa liberté de travail. De plus, cela ne règle en rien le problème posé, dans la mesure où il n'est guère possible de modifier pour autant l'intensité de ce rayonnement, sa densité par unité de surface ou le nombre des séquences d'irradiation. Finalement, les appareils décrits dans ces documents sont là encore d'application limitée à un temps déterminé, l'opérateur ne disposant que de la possibilité de gérer, dans une moindre mesure, le temps d'éclairage et de recharge des batteries pour qu'il puisse être sur qu'il respecte et garantisse l'épaisseur du matériau à photo polymériser.

En fin de compte, s'il est possible, au travers des techniques connues de jouer sur l'exposition d'une façon primaire, c'est à dire de diminuer ou d'augmenter le temps d'exposition, il est impossible, en temps réel aujourd'hui, de le faire avec une grande échelle de temps ou de puissance. En effet aucune variation dynamique n'est possible avec les appareils actuels.

Du document WO 01/60280 un dispositif électro-optic pour la photo polymérisation avec les caractéristiques décrit dans le préambule de la revendication 1 est connu.

La présente invention a pour but de remédier aux inconvénients précités en proposant un dispositif électro-optique pour la photo polymérisation de matériaux composites, d'application notamment dans le domaine dentaire permettant une alimentation indépendante, stable et réglable en énergie, comportant un système électronique optimisé et stable, une source lumineuse à base de LED ne nécessitant pas de ventilation active, ainsi que des moyens thermiques pour orienter et évacuer l'énergie thermique produite par ladite source afin d'assurer une polymérisation fiable durant l'acte clinique et dans le temps.

Ainsi, l'invention suivant la revendication 1, concerne un dispositif électro-optique pour la photo polymérisation de matériaux composites, d'application notamment dans le domaine dentaire, comportant une source lumineuse définie par une LED ou un groupement de LED, des moyens électroniques d'alimentation électrique comprenant une batterie associée à un dispositif de convertisseur de tension continue / continue communément appelé convertisseur DC/DC, des moyens passifs d'évacuation de chaleur, ainsi qu'une unité centrale de gestion des paramètres de fonctionnement de la source lumineuse pour la définition d'un profil énergétique de photo polymérisation déterminé.

Le convertisseur DC/DC, dont la sortie variable, permet d'ajuster sans résistance le courant de polarisation par limitation de la tension directe, en sorte que cela permet de sécuriser la qualité des soins prodigués grâce à une stabilité de la puissance émise en contrôlant le comportement thermique, une large autonomie, plusieurs jours, de la batterie grâce à une consommation électrique réduite, le maintien de la puissance émise quel que soit l'état de la charge de la batterie, jusqu'à la décharge complète de cette dernière.

Selon une caractéristique additionnelle du dispositif selon l'invention, il comporte un circuit de puissance permettant d'alimenter chaque LED ou groupement de LED à une valeur prédéfinie par modulation de rapport cyclique.

Selon une autre caractéristique additionnelle du dispositif selon l'invention, il comporte un dispositif de correction de la dérive thermique des LED.

Selon une autre caractéristique additionnelle du dispositif selon l'invention, les moyens passifs d'évacuation de chaleur comprennent une carte électronique support de LED dont la conception inclut des pistes métalliques de transfert de la chaleur de la base de chacune des LED vers la périphérie de la carte.

Selon une autre caractéristique additionnelle du dispositif selon l'invention, les moyens passifs d'évacuation de chaleur comprennent un matériau conducteur de chaleur disposé autour du boîtier de chacune des LED pour prélever le maximum de calories à chacune des diodes et les transférer à la périphérie de la carte.

Selon une autre caractéristique additionnelle du dispositif selon l'invention, les moyens passifs d'évacuation de chaleur comprennent un radiateur métallique solidarisé à la carte par une pâte ou une colle de transmission thermique, et un joint thermique entre ladite carte et ledit radiateur vers une pièce métallique de forte inertie thermique servant de réceptacle à calories et de support aux ensembles optiques nécessaires au système.

Selon une autre caractéristique additionnelle du dispositif selon l'invention, les moyens passifs d'évacuation de chaleur comprennent un capteur de température noyé dans le joint thermique et permettant d'avoir en temps réel le niveau de température de l'ensemble optique.

Les systèmes optiques, nécessaires à conduire la lumière, sont de manière à maintenir la puissance émise en respect des besoins énergétique de photo polymérisation en fonction des caractéristiques du matériau composite à photo polymériser.

Selon un mode de réalisation particulier du dispositif selon l'invention, les moyens d'évacuation de chaleur comprennent l'une ou l'autre des caractéristiques suivantes, de manière individuelle ou en combinaison :
- une carte électronique sur laquelle sont soudées les LED, les points de soudure étant reliés à des pistes électriques de grande dimension ayant une très bonne conductivité, thermique, ladite carte électronique est percée de puits thermiques métallisés qui conduisent les calories aussi rapidement que possible vers la face arrière de la carte et donc loin des LED.
- des produits conducteurs thermiques placés au contact des parois périphériques des diodes qui ne sont pas en contact avec la carte elle-même. Ces produits peuvent être pâteux et déposés entre les diodes puis durcis ensuite, ils peuvent être également solides et découpés à la forme exacte de l'emplacement des diodes maintenus de façon intime avec les diodes au moyen d'un bon conducteur thermique (pâte ou colle)
- un radiateur métallique à l'arrière de la carte, solidarisé à ladite carte par une pâte ou une colle thermique, servant à récupérer les calories provenant des puits thermiques traversant la carte.
- les éléments sont reliés thermiquement par de la pâte ou de la colle thermique à une pièce métallique de forte inertie thermique qui sert également de support aux éléments optiques. Cette dernière pièce sert à pomper rapidement les calories et à les stocker temporairement lorsque la lampe est allumée et les restitue plus lentement par conduction ou convection vers l'ensemble du système lorsque la lampe n'est pas utilisée.
- un système de détection de la température permettant de couper l'alimentation lorsque la capacité de stockage de la pièce métallique est atteinte.

Selon une caractéristique additionnelle du dispositif selon l'invention, les moyens électroniques d'alimentation comportent
- un circuit de commande par registre à décalage et modulation de rapport cyclique permettant de sélectionner et moduler la puissance d'émission de chaque groupe de LED,
- un convertisseur DC/DC à haut rendement alimentant le circuit de commande en abaissant la tension de batterie,
- une polarisation des diodes électroluminescentes directe par la sortie du convertisseur DC/DC en utilisant la résistance interne des diodes,
- un système de réglage de ladite tension de polarisation pour faire varier le courant d'alimentation des diodes et par conséquent, la-puissance optique,
- une correction automatique de cette tension de polarisation par asservissement thermique afin de disposer d'une puissance de sortie constante.

Le convertisseur DC/DC à haut rendement permet de diminuer le courant primaire issu de la batterie prolongeant ainsi sa durée de vie et son autonomie. De plus, l'utilisation de ce convertisseur DC/DC permet de s'affranchir des variations de tensions dues aux variations du niveau de charge de la batterie.

De manière avantageuse, la source lumineuse comporte un moyen de mesure de la température apte à détecter le stockage maximal de température compatible avec la stabilité de puissance optique émise.

Ce système de contrôle fonctionne avantageusement entre deux niveau minima et maxima fonctionnant en hystérésis pour limiter le courant dans les diodes en cas de dysfonctionnement du système de régulation thermique et réduire ainsi réchauffement.

Préférentiellement, la batterie est du type batterie Li ion munie d'un capteur de température pour sécuriser l'appareil.

Avantageusement, la batterie est du type batterie Ion hybride permettant de gérer le niveau de charge et de l'afficher sur un écran LCD.

Parmi les moyens de maintien de la puissance de la carte, on observera que le dispositif de control et de stabilisation de la puissance est piloté par asservissement, ce qui permet de maintenir cette puissance a la valeur désirée.

Avantageusement, la présente invention comporte un potentiomètre de préréglage de la consigne de puissance ce qui permet de régler une production industrielle à une même valeur connue grâce à un réglage individuel de chaque appareil.

Bien évidemment, une telle solution permet d'envisager d'autres fonctionnalités, telles que le téléréglage, le télédiagnostic ou encore la télémaintenance de la puissance du dispositif de photo polymérisation conforme à l'invention, ou encore le réglage a distance par voie d'Internet, ou le réglage par l'utilisateur ou la remise a niveau de la puissance en service après vente.

Les avantages qui découlent de la présente invention consistent en ce que le dispositif est d'application quasi universelle, car son utilisation n'est pas simplement limitée à un type de lampe LED déterminé. Dans la mesure où il est possible d'adopter n'importe quel profil énergétique de photo polymérisation, ce dispositif est, en effet, capable de s'adapter aux particularités de chacune de ces lampes. L'opérateur n'est donc plus contraint à l'utilisation d'une gamme particulière LED à polymériser les matériaux composites, sans compter qu'il peut modifier lui-même les conditions de fonctionnement de son dispositif de photo polymérisation en prenant en compte sa propre expérience, mais aussi les conditions de mise en oeuvre du matériau. Finalement un bon réglage de la puissance et son contrôle thermique permet de répondre aux besoins exprimés dans ce domaine.

D'autres buts et avantages de la présente invention apparaîtront dans la description qui va suivre, se rapportant à un mode de réalisation, donné à titre d'exemple indicatif et non limitatif.

La compréhension de cette description sera facilitée au vu des dessins joints en annexe et dans lesquels:
- la figure 1 est une représentation schématisée du dispositif objet de la présente invention, son corps apparaissant en transparence;
- la figure 2 est une représentation schématisée de galettes supports de diodes LED orientées perpendiculairement à l'axe longitudinal du corps du dispositif et réparties autour de cet axe;
- la figure 3 est une représentation schématisée et en coupe transversale de la figure 2 ;
- la figure 4 représente, de manière schématisée, le dispositif et un support de chargement électrique adapté ;
- la figure 5 correspond à une représentation schématisée du dispositif dont la partie, définissant l'alimentation en puissance et les moyens mise en oeuvre;

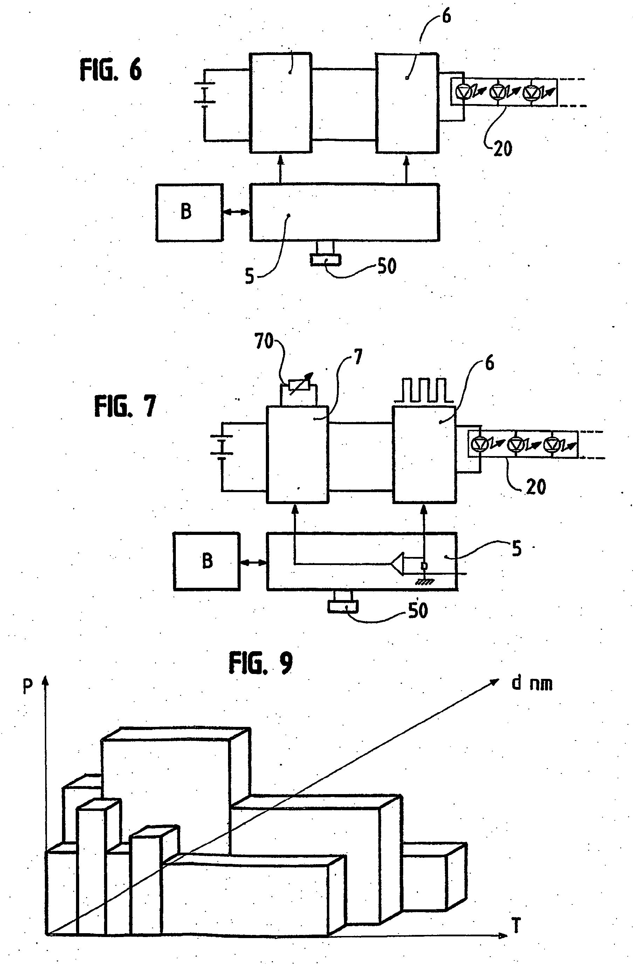

- la figure 6 et une vue similaire à la figure 5, où apparaissent les systèmes de réglage ;
- la figure 7 illustre, de manière schématisée, le dispositif, objet de l'invention, équipé de moyens de saisie à distance, du type énergétiques et/ou autres données dans sa mémoire;
- la figure 8 est une représentation synoptique plus détaillée du schéma électronique du dispositif ;
- la figure 9 est une représentation graphique illustrant, l'intensité ou la densité d'éclairement en fonction du temps, de la longueur d'onde et de la puissance d'émission ou du nombre de diodes émettant.

Tel que cela est représenté sur ces figures, la présente invention est relative à un dispositif 1 de photopolymérisation de matériaux composites qui trouvera un intérêt tout particulièrement dans le domaine dentaire.

Ce dispositif 1 comporte un corps 10 à l'intérieur duquel prennent position ses principaux éléments constitutifs. Ainsi, ce dispositif 1 comporte une source lumineuse 2 se présentant sous la forme d'un cône optique et comprenant préférentiellement des diodes électroluminescentes 20, dites LED, capables d'émettre un rayonnement lumineux d'une longueur d'onde déterminée ou dans un spectre de longueurs d'onde défini.

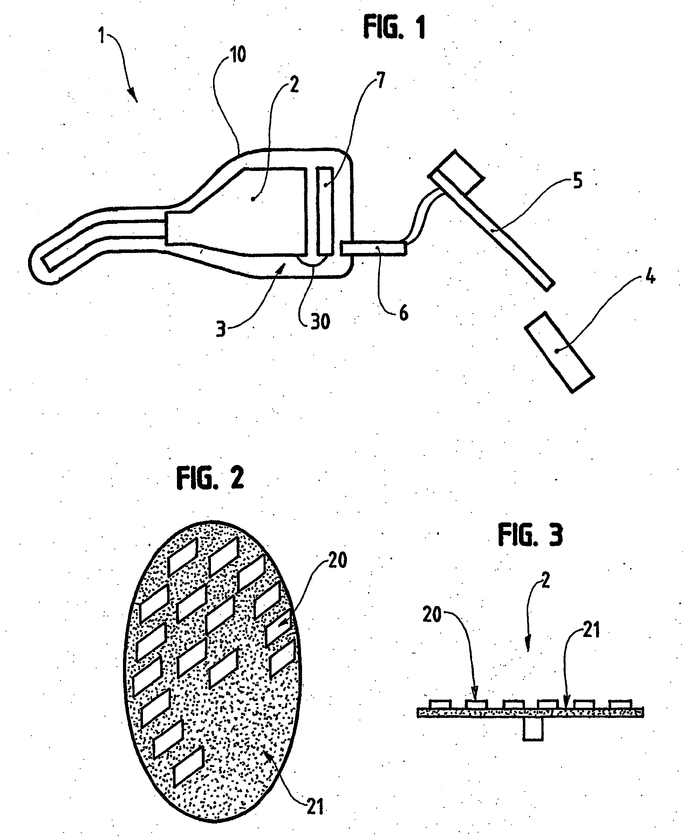

A titre d'exemple représenté sur les figures 2 et 3, les diodes LED 20 sont réparties sur une galette support 21 s'étendant perpendiculairement à l'axe longitudinal du corps 10.

Le dispositif 1 comporte, encore, des moyens 3 d'évacuation de chaleur pour orienter et émettre l'énergie thermique produite par la source lumineuse 2 en direction d'une zone correspondant à une évacuation ne diminuant pas l'efficacité du dispositif.

Comme visible sur cette figure 1, de tels moyens d'évacuation thermique 3 peuvent être constitués par un guide d'évacuation thermique 30 se situant en partie avant du corps 10.

On observera tout particulièrement que la présente invention n'est nullement limitée à de tels moyens thermiques ou optoélectroniques. En effet, ils peuvent encore emprunter la forme d'un ou plusieurs canaux d'évacuation, voire celle d'une pâte, connue par l'homme du métier familiarisé dans le domaine des guides de chaleur, et, qui dans la présente application, présente l'avantage de favoriser la conduction des calories générées, et permettant donc de conserver la même puissance émise. Dans la mesure où l'une des particularités de la présente invention consiste à optimiser la réaction de photo polymérisation, cette réduction de la chute énergétique de l'émission lumineuse à toute son importance.

En outre, ces moyens d'évacuation thermiques 3 peuvent se présenter sous forme d'une piste, chaque piste étant en correspondance avec une LED 20, ce qui permet une évacuation thermique pour chacune des LED 20 d'une manière sélective sur le support. Le dispositif se transforme ainsi en moyen d'élimination contrôlable et individuel. Comme cela a d'ores et déjà été exposé plus haut, cette particularité permet une optimisation contrôlable de l'évacuation thermique.

Par ailleurs, la source d'énergie 4, qui consiste sur la figure 1 en une batterie, et les moyens optiques peuvent être intégrés dans une partie interchangeable du corps 10, grâce à des moyens de connexion appropriés, ce qui facilite son remplacement en cas de vieillissement de la source lumineuse 2, sans compter que celle-ci peut être substituée par une source énergétique plus ou moins puissante, par exemple comportant plus ou moins de diodes LED 20. En outre, l'amovibilité de la source énergétique 4 permet de remplacer celle-ci rapidement pour la remplacer en cas de défaillance.

Le dispositif 1 comporte de plus encore une unité centrale 5 de gestion du fonctionnement de la source lumineuse 2 pour la définition d'un profil énergétique de photo polymérisation déterminé.

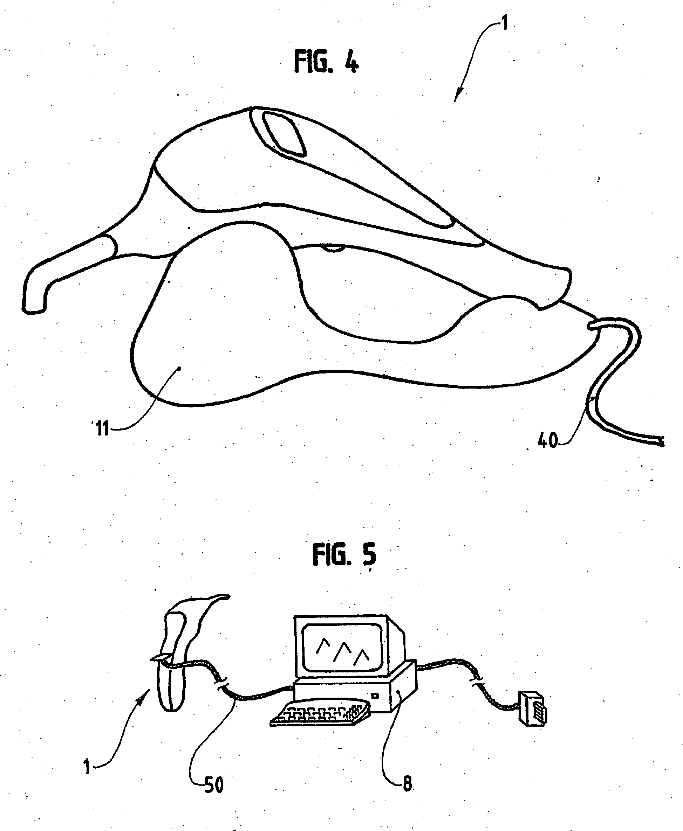

Ainsi, grâce à une alimentation électrique, sous forme autonome, donc d'une ou plusieurs batteries 4, préférentiellement du type rechargeable, et/ou de moyens de raccordement 40 au secteur d'alimentation en énergie électrique d'une habitation, représentés sur la figure 4, l'unité centrale 5 commande, par l'intermédiaire d'une carte de puissance 6, le fonctionnement de la source lumineuse 2 selon des séquences d'éclairage déterminées et à des puissances définies.

Sur la figure 4, il a été représenté un support de chargement 11 plus particulièrement adapté pour recevoir le dispositif 1 au cours du rechargement des batteries 4 intégrées dans ce dernier.

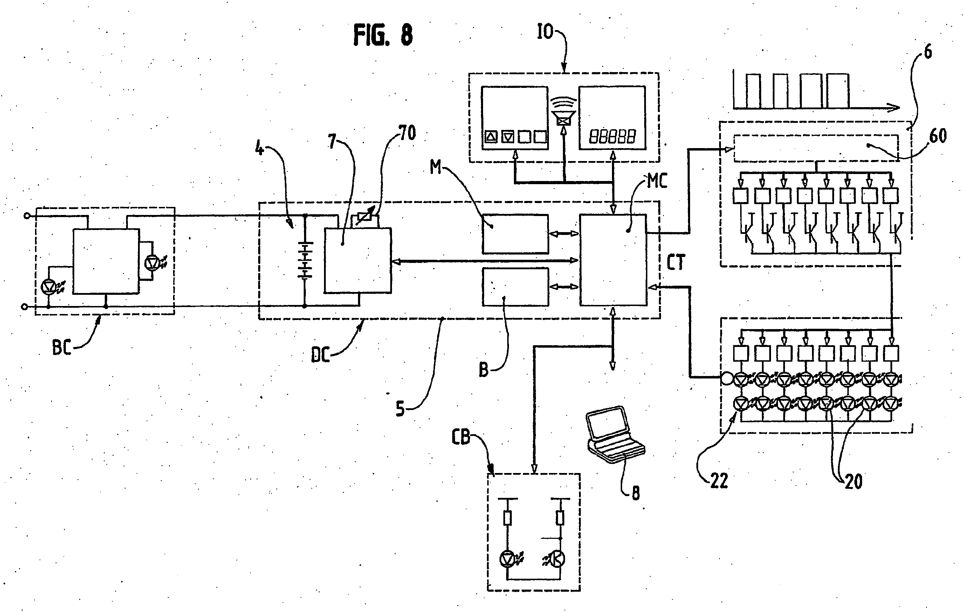

Quant aux diodes LED 20, elles sont, préférentiellement, subdivisées en modules élémentaires 22, comme cela est représenté schématiquement sur la figure 8, comportant chacun un nombre de diodes LED 20 identique ou non, et alimentés par des circuits de régulation. Ceux-ci permettent, au travers de l'unité centrale 5, d'alimenter les diodes LED 20 de chacun de ces modules élémentaires 22 à des puissances bien définies.

Par ailleurs, la source d'énergie 4 est associée à un dispositif 7 de convertisseur de tension continue/continue communément appelé convertisseur DC/DC, équipé d'un potentiomètre de réglage 70, et se présentant sous la forme d'un module.

Comme, plus particulièrement, visible sur la figure 9, le module DC/DC 7 tout comme le fait un transformateur en mode alternatif, découpe la tension de batterie et la lisse pour obtenir une tension de sortie parfaitement constante quelle que soit la tension issue de la batterie 4. Un dispositif de réglage permet d'ajuster une tension de sortie de base qui sera ensuite modulée en fonction des informations issues du capteur de température.

Par ailleurs, la carte de puissance 6 comporte un circuit 60 de commande par registre à décalage et modulation de rapport cyclique permettant de sélectionner et moduler la puissance d'émission de chaque groupe de LED 20.

Afin d'optimiser l'intégration de ces éléments dans une unité portable, donc peu encombrante, l'ensemble des registres de décalage et circuits de régulation de courant peuvent être regroupés dans un ASIC.

A noter, en outre, que l'intérêt de cette conception de registres de décalage et de circuits de régulation pour chaque module 22 de diodes LED 20, réside dans le fait qu'elle n'est pas limitée en terme de luminosité maximale, puisque plusieurs de ces modules 22 de diodes LED 20 pourront être mis en cascade.

Pour répondre encore à ce souci d'intégration, l'ASIC peut être monté sur la face opposée de la ou des galettes 21 par rapport aux diodes LED 20 ou modules 22 de diodes.

Il a été représenté en figure 8 un schéma synoptique plus détaillé du dispositif. Ainsi, celui-ci comprend notamment un bloc chargeur BC, une alimentation en courant continu DC, un micro-contrôleur MC relié à une mémoire M, à une bibliothèque B et à une interface opérateur IO.

Tel que représenté sur la figure 8, le module DC/DC 7 est directement relié à la batterie 4 dont il va abaisser la tension pour l'amener à la valeur de consigne de puissance voulue, cette consigne de puissance étant corrigée en temps réel par la carte unité centrale 5 en fonction des informations issues d'un capteur de température CT.

Sur la figure 8, il est représenté, de manière graphique, la puissance d'alimentation de chaque module 22 de diodes LED 20 pour un profil énergétique déterminé, au cours d'une séquence de rayonnement définie. Tandis que, dans la figure 9, il a été représenté l'intensité ou la densité d'éclairement en fonction du temps de la longueur d'onde et de la puissance d'émission ou du nombre de diodes émettrices.

Cette représentation permet encore de mettre en évidence qu'en utilisant différents rapports cycliques, l'unité centrale 5 a la possibilité de moduler la puissance des LED donc la puissance du rayonnement émis.

Aussi, selon l'invention, le dispositif 1 comporte, en combinaison, des moyens pour ajuster un ou plusieurs des paramètres du fonctionnement de la puissance lumineuse, à savoir :
- l'intensité d'éclairement
- le rapport cyclique
- et/ou la densité d' éclairement par unité de surface ;
- le contrôle de la température ;
- et/ou durée de chacune de ces séquences de manière à adapter le profil énergétique de polymérisation en fonction des caractéristiques de la lampe à photo polymériser.

Ces moyens consistent en des moyens de sélection dans une mémoire raccordée à ladite unité centrale 5, d'un profil énergétique déterminé parmi plusieurs profils préenregistrés dans cette mémoire et/ou d'une donnée, là encore, parmi plusieurs ayant été préalablement enregistrées dans ladite mémoire, relative à un ou plusieurs des paramètres ajustables.

Ainsi, à titre d'exemple, dans la carte DC / DC 7 un découpage de la tension de consigne permettra de faire varier la puissance de chaque groupe de diodes 20.

L'opérateur peut encore avoir le choix, au travers d'un menu, entre différentes puissances énergétiques préétablies. A noter que ces moyens de sélection permettent à l'opérateur de régler cette puissance.

Bien évidemment, une combinaison de ces différents types de moyens de réglage est envisageable.

Avantageusement, le dispositif comporte, également, des moyens de réglage, là encore sous forme d'un potentiomètre et/ou d'un écran tactile et/ou tout autre moyen de saisie, notamment à distance, pour la programmation de la mémoire raccordée à l'unité centrale, précisément pour y enregistrer différentes valeurs énergétiques et/ou différentes données relatives aux paramètres ajustables.

A noter que ces moyens de réglage peuvent faire appel à des moyens de téléchargement de données, notamment au travers d'un micro ordinateur 8 via une interface RS232C 50, tel que représenté sur la figure 5, pour télécharger, par exemple, de nouveaux réglages énergétiques au travers d'un réseau de type Internet. Ces moyens de téléchargement peuvent encore emprunter la forme d'un modem, soit directement intégré au dispositif, soit au support de chargement 11 auquel il a été fait référence plus haut dans la description.

Selon un autre mode de réalisation, ces moyens de réglage de la puissance peuvent se présenter sous la forme de moyens de lecture de codes barres CB.

Il est également possible d'utiliser une mémoire sous forme d'une carte à puce, préférentiellement du type programmable, le dispositif 1 comportant un lecteur approprié. Là également, ce lecteur de carte à puce peut se retrouver au niveau du support de chargement 11, en particulier si l'on souhaite alléger la partie outil que doit manipuler l'utilisateur.

Encore une fois, l'on observera que le dispositif 1 peut comporter une combinaison de ces différents modes de réalisation des moyens de saisie décrits ci-dessus.

Les moyens pour ajuster un ou plusieurs des paramètres de la puissance de la source lumineuse ont en particulier pour but d'intervenir encore sur la densité d'éclairement par unité de surface, comme cela a été indiqué ci-dessus. En fait, il est possible de régler cette densité d'éclairement en intervenant, notamment par l'intermédiaire des circuits de régulation, sur le nombre des diodes LED alimentées au niveau de chaque module élémentaire et/ou sur l'intensité de leur alimentation au cours d'une réaction de photo polymérisation.

Il ressort de la description qui précède que la présente invention répond, parfaitement, au problème posé en ce sens qu'elle apporte une réelle réponse au modification de puissance et au élévation thermiques des lampes a LED comme dispositifs actuels pour la photo polymérisation de différents types de matériaux composites. En fin compte, le dispositif, conforme à l'invention, donne la possibilité à l'utilisateur d'ajuster les conditions de fonctionnement de son appareil comme il le souhaite, de sorte qu'il n'est plus limité, comme souvent par le passé, à l'utilisation d'une puissance déterminée et à une chute de cette puissance dans le temps.

## Revendications

1. Dispositif électro-optique pour la photo polymérisation de matériaux composites, d'application notamment dans le domaine dentaire, comportant une source lumineuse (2) définie par une diode LED (20) ou un groupement de diodes LED, des moyens électroniques d'alimentation électrique comprenant une batterie (4), ainsi qu'une unité centrale (5) de gestion des paramètres de fonctionnement de la source lumineuse pour la définition d'un profil énergétique de photo polymérisation déterminé, **caractérisé en ce qu'**il comporte des moyens passifs (3) d'évacuation de chaleur, et que la batterie (4) est associée à un dispositif (7) de convertisseur de tension continue / continue communément appelé convertisseur DC/DC.

2. Dispositif selon la revendication 1, **caractérisé en ce qu'**il comporte un circuit de puissance permettant d'alimenter chaque LED (20) ou groupement de LED (20) à une valeur prédéfinie par modulation de rapport cyclique.

3. Dispositif selon la revendication 1 ou la revendication 2, **caractérisé en ce qu'** il comporte un dispositif de correction de la dérive thermique des LEDS.

4. Dispositif selon l'une quelconque des revendications précédentes, **caractérisé en ce que** les moyens passifs d'évacuation de chaleur comprennent une carte électronique support de LED dont-la conception inclut des pistes métalliques de transfert de la chaleur de la base de chacune des LED vers la périphérie de la carte.

5. Dispositif selon l'une quelconque des revendications précédentes, **caractérisé en ce que** les moyens passifs d'évacuation de chaleur comprennent un matériau conducteur de chaleur disposé autour du boîtier de chacune des LED pour prélever le maximum de calories à chacune des diodes et les transférer à la périphérie de la carte.

6. Dispositif selon les revendications 4 ou 5 **caractérisé en ce que** les moyens passifs d'évacuation de chaleur comprennent un radiateur métallique solidarisé à la carte par une pâte ou une colle de transmission thermique, et un joint thermique entre ladite carte et ledit radiateur vers une pièce métallique de forte inertie thermique servant de réceptacle à calories et de support aux ensembles optiques nécessaires au système.

7. Dispositif selon la revendication 6, **caractérisé en ce que** les moyens passifs d'évacuation de chaleur comprennent un capteur de température noyé dans le joint thermique et permettant d'avoir en temps réel le niveau de température de l'ensemble optique.

8. Dispositif selon l'une quelconque des revendications précédentes, **caractérisé en ce que** les moyens d'évacuation de chaleur comprennent de manière indépendante ou en combinaison:
- une carte électronique sur laquelle sont soudées les LED, les points de soudure étant reliés à des pistes électriques de grande dimension ayant une très bonne conductivité thermique, ladite carte électronique étant percée de puits thermiques métallisés conduisant les calories aussi rapidement que possible vers la face arrière de la carte et donc loin des LED,
- des produits conducteurs thermiques placés au contact des parois périphériques des diodes qui ne sont pas en contact avec la carte elle-même, ces produits pouvant être pâteux et déposés entre les diodes puis durcis ensuite, et pouvant également être solides et découpés à la forme exacte de l'emplacement des diodes maintenus de façon intime avec les diodes au moyen d'un bon conducteur thermique (pâte ou colle),
- un radiateur métallique à l'arrière de la carte, solidarisé à ladite carte par une pâte ou une colle thermique, servant à récupérer les calories provenant des puits thermiques traversant la carte,
- tous ces éléments étant reliés thermiquement par de la pâte ou de la colle thermique à une pièce métallique de forte inertie thermique qui sert également de support aux éléments optiques, cette dernière pièce servant à pomper rapidement les calories et à stocker temporairement les calories lorsque la lampe est allumé et les restituant plus lentement par conduction ou convection vers l'ensemble du système lorsque la lampe n'est pas utilisée,
- un système de détection de la température permettant de couper l'alimentation lorsque la capacité de stockage de la pièce métallique est atteinte.

9. Dispositif selon l'une quelconque des revendications précédentes, **caractérisé en ce que** les moyens électroniques d'alimentation comportent:
- un circuit de commande par registre à décalage et modulation de rapport cyclique permettant de sélectionner et moduler la puissance d'émission de chaque groupe de LED,
- un convertisseur DC/DC à haut rendement alimentant le circuit de commande en abaissant la tension de batterie,
- une polarisation des diodes électroluminescentes directe par la sortie du convertisseur DC/DC en utilisant la résistance interne des diodes,
- un système de réglage de ladite tension de polarisation pour faire varier le courant d'alimentation des diodes et par conséquent, la puissance optique,
- une correction automatique de cette tension de polarisation par asservissement thermique afin de disposer d'une puissance de sortie constante.

10. Dispositif selon l'une quelconque des revendications précédentes, **caractérisé en ce que** la source lumineuse comporte un moyen de mesure de la température apte à détecter le stockage maximal de température compatible avec la stabilité de puissance optique émise.

11. Dispositif selon l'une quelconque des revendications précédentes, **caractérisé en ce que** la batterie est du type batterie Li ion munie d'un capteur de température pour sécuriser l'appareil.

12. Dispositif selon l'une quelconque des revendications 1 à 10, **caractérisé en ce que** la batterie est du type batterie ion hybride permettant de gérer le niveau de charge et de l'afficher sur un écran LCD.

13. Dispositif selon l'une quelconque des revendications précédentes, **caractérisé en ce qu'**il comporte un potentiomètre de préréglage de la consigne de puissance permettant de régler une production industrielle à une même valeur connue grâce à un réglage individuel de chaque appareil.

## Claims

1. An electro-optical device for the photopolymerisation of composite materials, for application especially in the dental field, comprising a light source (2) defined by an LED diode (20) or a group of LED diodes, electrical power supply means comprising a battery (4), as well as a central unit (5) for managing parameters for operating the light source for defining a determined photopolymerisation energy profile, **characterised in that** it comprises passive means (3) for evacuating heat, and **in that** the battery (4) is connected to a direct-current/direct-current converter device (7) commonly known as DC/DC converter.

2. The device as claimed in Claim 1, **characterised in that** it comprises a power circuit for feeding each LED (20) or LED (20) group at a value predefined by modulation of cyclic ratio.

3. The device as claimed in Claim 1 or Claim 2, **characterised in that** it comprises a device for correction of the derive thermal des LEDS.

4. The device as claimed in any one of the preceding claims, **characterised in that** the passive heat evacuation means comprise an electronic LED support card whereof the design includes metallic tracks for transferring the heat from the base of each LED to the periphery of the card.

5. The device as claimed in any one of the preceding claims, **characterised in that** the passive heat evacuation means comprise a heat-conducting material placed around the casing of each of the LED for taking the maximum calories from each of the diodes and transferring them to the periphery of the card.

6. The device as claimed in Claims 4 or 5, **characterised in that** the passive heat evacuation means comprise a metal radiator affixed to the card by paste or thermal transmission adhesive, and a thermal joint between said card and said radiator to a metal piece of strong thermal inertia serving as calorie and support receptacle for optical assemblies necessary for the system.

7. The device as claimed in Claim 6, **characterised in that** the passive heat evacuation means comprise a temperature sensor embedded in the thermal joint and detecting the temperature level of the optical assembly in real time.

8. The device as claimed in any one of the preceding claims, **characterised in that** the heat evacuation means comprise independently or in combination :
- an electronic card on which are soldered the LED, the soldered points being connected to large-size electrical tracks having very good thermal conductivity, said electronic card being pierced with metallic thermal wells which conduct the calories as rapidly as possible to the rear face of the card and thus far from the LED,
- thermal conductive products placed in contact with the peripheral walls of the diodes which are not in contact with the card itself, these products able to be pasty and placed between the diodes, then hardened, and likewise able to be solid and cut out to the exact shape of the placement of the diodes held closely to the diodes by means of a thermal conductor (paste or adhesive),
- a metal radiator to the rear of the card, integral with said card by a paste or thermal adhesive, serving to recover the calories coming from the thermal wells passing through the card,
- all these elements being thermally connected by paste or thermal adhesive to a metal piece of strong thermal inertia likewise serving as support to the optical elements, the latter acting to rapidly pump the calories and temporarily store the calories when the lamp is lit and restoring them more slowly by conduction or convection to the assembly of the system when the lamp is not in use,
- a system for temperature detection for cutting the feed when the storage capacity of the metallic piece is reached.

9. The device as claimed in any one of the preceding claims, **characterised in that** the electronic supply means comprise :
- a shift register and modulation control circuit of cyclic ratio for selecting and modulating the emission power of each LED group,
- a high-yield DC/DC converter supplying the control circuit by lowering the battery voltage,
- direct polarisation of the electroluminescent diodes by the sortie of the DC/DC converter by using the internal resistance of the diodes,
- a system for regulating said polarisation voltage for varying the supply current of the diodes and consequently the optical power,
- automatic correction of this polarisation tension by thermal servo-control so as to have a constant output power.

10. The device as claimed in any one of the preceding claims, **characterised in that** the light source comprises means for measuring the temperature suitable for detecting maximal temperature storage compatible with the stability of transmitted optical power.

11. The device as claimed in any one of the preceding claims, **characterised in that** the battery is of the Li ion battery type fitted with a temperature sensor for securing the apparatus.

12. The device as claimed in any one of Claims 1 to 10, **characterised in that** the battery is of the ion hybrid battery type for managing the charge level and displaying the latter on an LCD monitor.

13. The device as claimed in any one of the preceding claims, **characterised in that** it comprises a pre-adjustment potentiometer of the depositing of power for regulating industrial production at the same known value due to individual adjustment of each apparatus.

## Patentansprüche

1. Elektrooptische Vorrichtung zur Photopolymerisation von Kompositwerkstoffen, zur Anwendung insbesondere auf dem Gebiet der Zahnmedizin, aufweisend eine Lichtquelle (2), die durch eine LED-Diode (20) oder eine Gruppierung von LED-Dioden definiert ist, elektronische Mittel zur Versorgung mit elektrischem Strom, die eine Batterie (4) aufweisen, sowie eine Zentraleinheit (5) zur Verwaltung der Funktionsparameter der Lichtquelle zur Definition eines bestimmten energetischen Photopolymerisationsprofils,
**dadurch gekennzeichnet, dass** sie passive Mittel (3) zur Wärmeabführung aufweist und dass die Batterie (4) an eine Gleichspannungswandlervorrichtung (7), gemeinhin DC/DC-Wandler genannt, angeschlossen ist.

2. Vorrichtung nach Anspruch 1,
**dadurch gekennzeichnet, dass** sie einen Stromkreis aufweist, der gestattet, eine jede LED (20) oder eine jede LED-Gruppierung (20) mit einem Wert zu versorgen, der durch zyklische Verhältnismodulation vordefiniert ist.

3. Vorrichtung nach Anspruch 1 oder 2,
**dadurch gekennzeichnet, dass** sie eine Vorrichtung zur Korrektur der thermischen Ableitung der LEDs aufweist.

4. Vorrichtung nach einem der vorstehenden Ansprüche,
**dadurch gekennzeichnet, dass** die passiven Mittel zur Wärmeabführung eine elektronische LED-Trägerkarte aufweisen, deren Auslegung Metallbahnen zur Wärmeübertragung von der Basis einer jeden LED in Richtung auf die Peripherie der Karte einschließt.

5. Vorrichtung nach einem der vorstehenden Ansprüche,
**dadurch gekennzeichnet, dass** die passiven Mittel zur Wärmeabführung ein Wärme leitendes Material umfassen, das um das Gehäuse einer jeden der LEDs herum angeordnet ist, um das Maximum an wärmeeinheiten von einer jeden der Dioden abzuziehen und an die Peripherie der Karte zu übertragen.

6. Vorrichtung nach Anspruch 4 oder 5,
**dadurch gekennzeichnet, dass** die passiven Mittel zur Wärmeabführung ein metallisches Abstrahlblech umfassen, das mit der Karte durch eine Paste oder einen Klebstoff zur Wärmeübertragung fest verbunden ist, und eine thermische Verbindungsstelle zwischen der Karte und dem Abstrahlblech in Richtung auf ein Metallteil hohen Wärmeleitwiderstands, das als Wärmeeinheiten-Auffang und als Träger für die optischen Einheiten dient, die das System erfordert.

7. Vorrichtung nach Anspruch 6,
**dadurch gekennzeichnet, dass** die passiven Mittel zur Wärmeabführung einen Temperaturfühler umfassen, der in der thermischen Verbindungsstelle eingebettet ist und gestattet, in Echtzeit das Temperaturniveau der optischen Einheit zu messen.

8. Vorrichtung nach einem der vorstehenden Ansprüche,
**dadurch gekennzeichnet, dass** die Mittel zur Wärmeabführung unabhängig oder in Kombination Folgendes umfassen:
- eine elektronische Karte, auf der die LEDs geschweißt sind, wobei die Schweißpunkte mit elektrischen Bahnen großer Dimension verbunden sind, die eine sehr gute spezifische Wärmeleitfähigkeit haben, wobei die elektronische Karte von metallisierten thermischen Senken durchbohrt ist, die die Wärmeeinheiten so schnell wie möglich in Richtung auf die Rückseite der Karte und folglich entfernt von den LEDs leiten,
- Wärme leitende Produkte, die im Kontakt mit den peripheren Wänden der Dioden angeordnet sind, die nicht mit der Karte selbst in Kontakt sind, wobei diese Produkte pastig und zwischen den Dioden abgelagert, ferner danach gehärtet sein können, und auch Festkörper und in der exakten Form der Stelle der Dioden geschnitten sein können, mit den Dioden mittels eines guten Wärmeleiters (Paste oder Klebstoff) intim gehalten,
- ein metallisches Abstrahlblech an der Rückseite der Karte, das mit der Karte durch eine Paste oder einen thermischen Klebstoff fest verbunden ist, das dazu dient, die Wärmeeinheiten zurückzugewinnen, die von den thermischen Senken, die die Karte durchqueren, ausgehen,
- alle diese Elemente, die thermisch durch die Paste oder den thermischen Klebstoff mit einem Metallteil hohen Wärmeleitwiderstands verbunden sind, das ebenfalls als Träger für die optischen Elemente dient, wobei dieses letztgenannte Teil dazu dient, die Wärmeeinheiten schnell zu pumpen und temporär die Wärmeeinheiten zu speichern, wenn die Lampe eingeschaltet ist und sie langsamer durch Leitung oder Wärmekonvektion in Richtung auf die Einheit des Systems zurückzugeben, wenn die Lampe nicht benutzt wird,
- ein System zur Erfassung der Temperatur, das gestattet, die Stromversorgung zu unterbrechen, wenn die Speicherkapazität des Metallteils erreicht ist.

9. Vorrichtung nach einem der vorstehenden Ansprüche,
**dadurch gekennzeichnet, dass** die elektronischen Stromversorgungsmittel Folgendes aufweisen:
- einen Kreis zur Steuerung durch Schieberegister und zyklische Verhältnismodulation, gestattend, die Sendeleistung einer jeden LED-Gruppe auszuwählen und zu modulieren,
- einen DC/DC-Wandler mit hohem Wirkungsgrad, der den Steuerkreis speist, indem er die Batteriespannung herabsetzt,
- eine Polung der Lumineszenzdioden direkt durch den Ausgang des DC/DC-Wandlers, indem der Innenwiderstand der Dioden genutzt wird,
- ein System zur Regelung der Polarisationsspannung, um den Speisestrom der Dioden und demzufolge die optische Leistung zu variieren,
- eine automatische Korrektur dieser Polarisationsspannung durch thermische Regelung, um über eine konstante Sendeleistung zu verfügen.

10. Vorrichtung nach einem der vorstehenden Ansprüche,
**dadurch gekennzeichnet, dass** die Lichtquelle ein Mittel zum Messen der Temperatur aufweist, das in der Lage ist, die maximale Temperaturspeicherung zu erfassen, die mit der Stabilität abgegebener optischer Leistung kompatibel ist.

11. Vorrichtung nach einem der vorstehenden Ansprüche,
**dadurch gekennzeichnet, dass** die Batterie vom Li-Ionen-Batterietyp ist, die mit einem Temperaturfühler versehen ist, um dem Gerät Sicherheit zu verleihen.

12. Vorrichtung nach einem der Ansprüche 1 bis 10,
**dadurch gekennzeichnet, dass** die Batterie vom Hybrid-Ionen-Batterietyp ist, der gestattet, das Ladungsniveau zu verwalten und es an einem LCD-Bildschirm anzuzeigen.

13. Vorrichtung nach einem der vorstehenden Ansprüche,
**dadurch gekennzeichnet, dass** sie ein Potentiometer zur Voreinstellung der Leistungs-Einstellgröße aufweist, das gestattet, eine industrielle Produktion auf ein und denselben bekannten Wert dank einer individuellen Regelung eines jeden Geräts einzustellen.
